# EUROPEAN PATENT APPLICATION

(11) **EP 0 573 071 A2**
(43) Date of publication of application: **08.12.1993**
(21) Application number: 93109051.8
(22) Date of filing: 04.06.1993
(51) Int. Cl.: G06F 9/38

(54) **A microprocessor**

(30) Priority: 05.06.1992 JP 145602/92; 25.05.1993 JP 122622/93
(71) Applicant: HITACHI, LTD., Chiyoda-ku, Tokyo 100 (JP)
(72) Inventor: Yamamoto, Mitsuyoshi, Kodaira-shi, Tokyo (JP); Arakawa, Fumio, Nerima-ku, Tokyo (JP); Narita, Susumu, Kokubunji-shi, Tokyo (JP)
(74) Representative: Strehl Schübel-Hopf Groening & Partner

(57) **Abstract**

A microprocessor comprises an instruction decoder (12, 13) provided for each pipeline to generate a control signal for each pipeline, a micro-ROM (14) which generates control signals for the pipelines at one time, and a selection circuit (15...17) to select an output between the instruction decoders (12, 13) and the micro-ROM (14). The output selected by the selection circuit (15...17) virtually constitutes a pipeline control signal.

## Description

### BACKGROUND OF THE INVENTION

The present invention relates to a control system of microprocessors and more particularly to a technology effectively applied to microprocessors of superscalar system that execute instructions simultaneously by using a plurality of pipelines. More specifically, this invention relates to a technology suitably applicable to a control system of CISC microprocessors which have high-level complex instructions calling for processing large amount of data and complex processing.

In recent years a microprocessor of superscalar system has been proposed, which has a plurality of pipelines and executes two or more instructions parallelly. ("Nikkei Electronics, November 27, 1989 issue" page 191-200, published by Nikkei BP.)

In a microprocessor having two arithmetic logic circuits, one for instruction execution and one for address calculation, an invention has been proposed whereby when it becomes necessary to calculate data of bit length in excess of a bit width that one arithmetic logic circuit can handle in executing a single instruction, two arithmetic logic circuits are combined to perform that calculation. (Japanese Patent Laid-Open No.86897/1987.)

### SUMMARY OF THE INVENTION

Of the examples cited above, the former concerns a so-called RISC type processor which has only such simple instructions as perform basic calculations and transfers. Hence, when the pipeline system is to perform processing as complex as a high-level instruction in the CISC type processor, it is necessary to realize a function equivalent to the complex high-level instruction by combining a plurality of simple instructions. In this case, there is a possibility that register and memory conflicts between the pipelines and also branch instructions may disturb the pipelines, taking longer to finish the task than it would when the same task is executed in a single instruction. For this reason, instruction sets suited for the parallel processing are needed for higher speed, which in turn will increase the burden of software such as compiler.

The latter of the cited example represents a case where a plurality of arithmetic logic circuits are used in executing a single instruction. This method enables effective use of arithmetic logic circuits when calculating data whose bit width is large. However, since the microprocessor of such a configuration has only one pipeline, it basically executes only one instruction at a time, making it difficult to increase the execution speed.

The object of this invention is to enable the CISC type microprocessor having complex instructions to execute the complex instructions at high speeds through the pipeline processing.

The above and other objects and features of the present invention will become apparent from the following description in this specification and the accompanying drawings.

Representative aspects of this invention disclosed in this application may be outlined as follows.

A microprocessor having a plurality of pipelines, which include a plurality of instruction decoders and instruction execution units, is provided with: a first function whereby the pipelines are used independently of each other to execute a plurality of instructions parallelly; and a second function whereby the pipelines are used simultaneously to execute a single instruction.

To achieve the above functions, the microprocessor of the present invention comprises: an instruction decoder provided for each pipeline to generate a control signal for each pipeline; a common micro-ROM that stores microinstructions which generate control signals for the pipelines; and a selection circuit to select the control signal either from the instruction decoder or the micro-ROM; whereby the output selected by the selection circuit constitutes a pipeline control signal. When the decoded instruction is executable in one cycle, the selection circuit selects outputs from the instruction decoders to control the pipelines. When the decoded instruction requires two or more cycles for execution, the selection circuit selects an output from the instruction decoder in only the first cycle and, from the next cycle until the instruction is finished, continues to select the control signals output from the micro-ROM to control the plurality of pipelines.

With the above-mentioned means, simple instructions, each executable in one cycle, are executed parallelly by using a plurality of pipelines independently; and a complex instruction that requires a large amount of data and complex processing is executed by using a plurality of pipelines simultaneously. Thus it is possible to increase the speed of the CISC type microprocessor which executes programs made up of simple and complex instructions.

### BRIEF DESCRIPTION OF THE DRAWINGS

Figure 1 is a block diagram showing an example configuration of the microprocessor according to this invention;
Figure 2 is a block diagram showing an example configuration of a control unit and an arithmetic execution unit of the microprocessor according to the invention;
Figure 3 is a diagram showing the overall configuration of the microprocessor of the invention and the flow of pipeline;
Figure 4 is a timing chart showing the output timing of control information from the control unit and the data input/output timing to/from the arithmetic execution unit;
Figure 5 is an example pipeline processing of simple instructions;
Figure 6 is another example of pipeline processing of simple instructions;
Figure 7 is a further example of pipeline processing of simple instructions;
Figure 8 is a further example of pipeline processing of simple instructions;
Figure 9 is a further example of pipeline processing of simple instructions;
Figure 10 is a further example of pipeline processing of simple instructions;
Figure 11 is a further example of pipeline processing of simple instructions;
Figure 12 is an example pipeline processing of a CMP instruction;
Figure 13 is an example pipeline processing of a complex instruction;
Figure 14 is an example pipeline processing of simple instructions and a complex instruction;
Figure 15 is an example field configuration of an abbreviated instruction;
Figure 16 is a further example of field configuration of an abbreviated instruction;
Figure 17 is an example field configuration of a general instruction;
Figure 18 is a block diagram showing an example configuration of an instruction decoder unit of the microprocessor according to this invention;
Figure 19(a) and 19(b) are example field configurations of outputs of the instruction decoder;
Figure 20 is an example field configuration of an output of the micro-ROM;
Figure 21 is a block diagram showing an example configuration of a system using the microprocessor according to the invention;
Figure 22 is a block diagram showing an example configuration of a selector control unit according to this invention; and
Figure 23 is a table showing the relationship between control signals entered into the selector control unit.

### BRIEF DESCRIPTION OF THE PREFERRED EMBODIMENTS

An embodiment of this invention will be described in detail by referring to accompanying drawings.

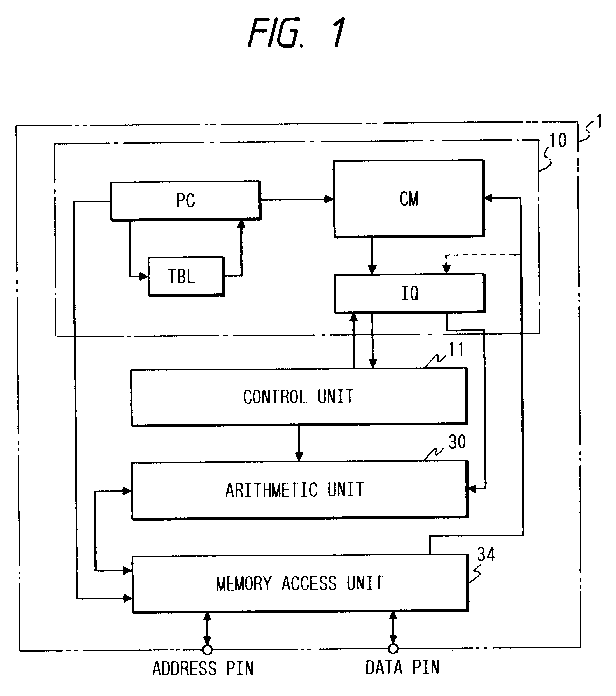

Figure 1 shows one example configuration of the microprocessor that employs the system of this invention.

In the figure, circuit blocks inside a two-dot line box may, for example, be formed on a single semiconductor chip such as a monocrystalline silicon substrate.

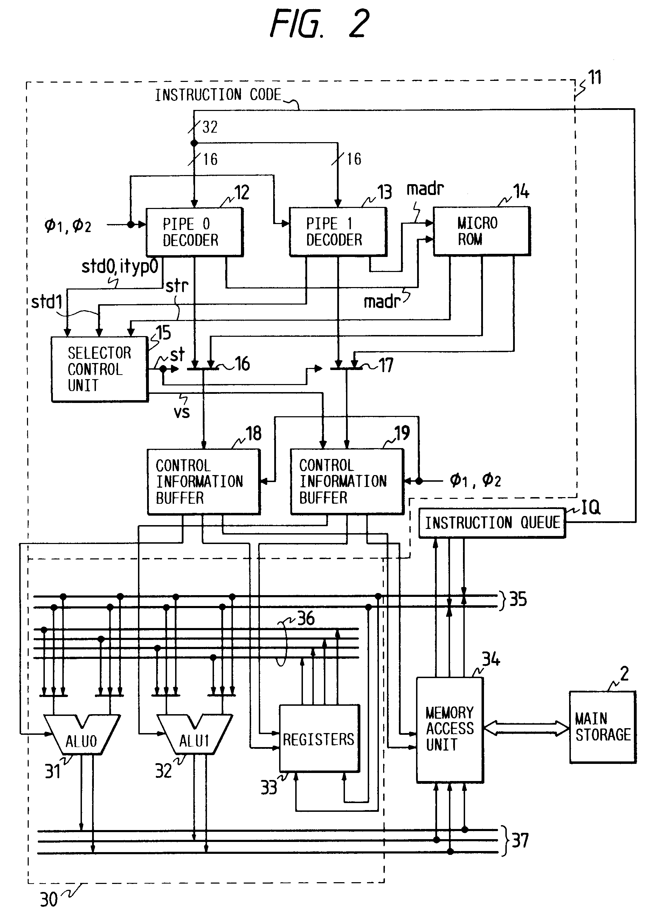

The microprocessor ***1*** of this embodiment has an instruction fetch unit ***10*** including a program counter ***PC*** for generating an instruction fetch address, an instruction cache memory ***CM*** for storing frequently used programs, a management table ***TBL***, and an instruction queue ***IQ*** for holding a plurality of instructions; a control unit ***11*** which decodes instructions taken into the instruction queue ***IQ*** and generates control signals successively; an arithmetic execution unit ***30***, made up of arithmetic logic units 31, 32 and a register 33, as shown in Figure 2, to calculate and process data according to the instructions; and a memory access unit ***34*** including an address calculator to generate an address for accessing external memory, an address input/output buffer and a data input/output buffer.

Figure 2 shows one example embodiment of the control unit ***11*** and the arithmetic execution unit ***30***. The control unit ***11*** and the arithmetic execution unit ***30*** of this embodiment has two pipelines (referred to as pipe 0 and pipe 1, respectively). Each instruction consists, for example, of 16 bits.

The control unit ***11*** includes: two instruction decoders ***12*****, *13***; a common micro-ROM ***14*** storing microinstructions corresponding to macroinstructions supplied from the main storage ***2***; selectors ***16***, ***17*** for selecting a control signal output from either the micro-ROM ***14*** or the instruction decoders ***12***, ***13***; a selector control unit ***15*** for generating control signals ***st*** and ***vs*** for the selectors ***16***, ***17***; and control information buffers ***18***, ***19*** for holding the control signals from the instruction decoders ***12***, ***13*** or the micro-ROM ***14***. According to the control signals ***std0, std1, ityp0,*** str from the instruction decoders ***12***, ***13*** and from the micro-ROM ***14***, the selector control unit ***15*** outputs to the selectors ***16***, ***17*** a selector control signal which causes them to select the control signals from the instruction decoders when the instruction decoder outputs are valid and to select the control signal, which is formed according to microinstructions stored in the micro-ROM, when it is valid. The selector control unit ***15*** sends a control signal ***vs*** for validating or invalidating the pipe 1 to the control information buffer ***19***. The control signal ***vs*** held in the control information buffer ***19*** is fed to the arithmetic execution unit ***30*** when the control signal ***vs*** represents the pipe 1 as being valid.

The arithmetic execution unit 30 includes arithmetic logic units ***31, 32,*** a register unit ***33***, and internal buses ***35, 36, 37*** interconnecting these components. The arithmetic logic units 31, 32 perform calculations for pipe 0 and pipe 1. The register unit ***33*** has a plurality of registers, which are shared by pipe 0 and pipe 1 and hold calculation results from the arithmetic logic units 31, 32 and data read from memory. The memory access unit ***34*** includes a data cache memory for storing data, generates and outputs an address for accessing the main storage ***2***, and takes in data from the main storage ***2*** at an appropriate timing.

The control unit ***11*** and the arithmetic execution unit 30 are operated in synchronism with clocks **φ*₁*** and **φ*₂***, respectively, which are 180 degrees apart.

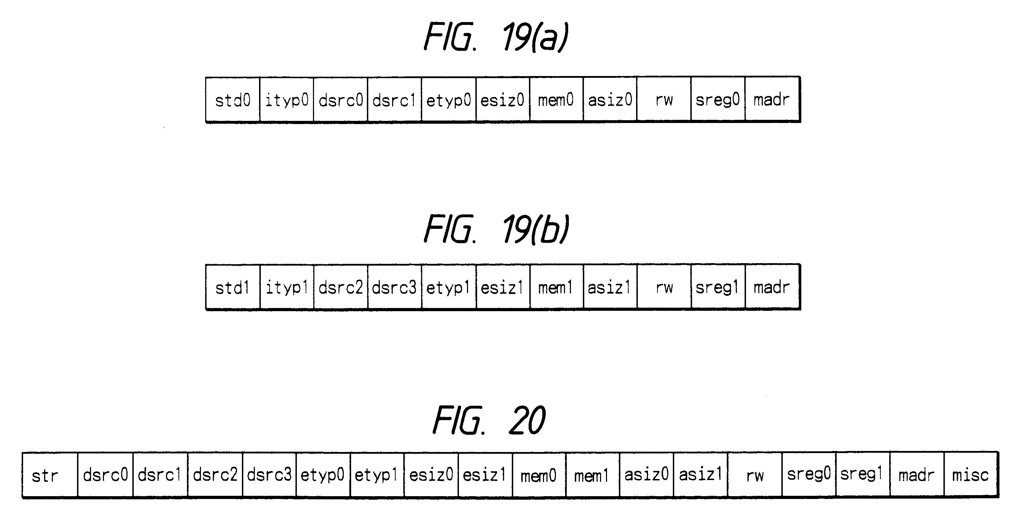

Figure 19(a) shows a control signal (example field configuration) output from the instruction decoder ***12***. Figure 19(b) shows a control signal (example field configuration) output from the instruction decoder ***13***. Figure 20 shows a control signal (example field configuration) output from the micro-ROM.

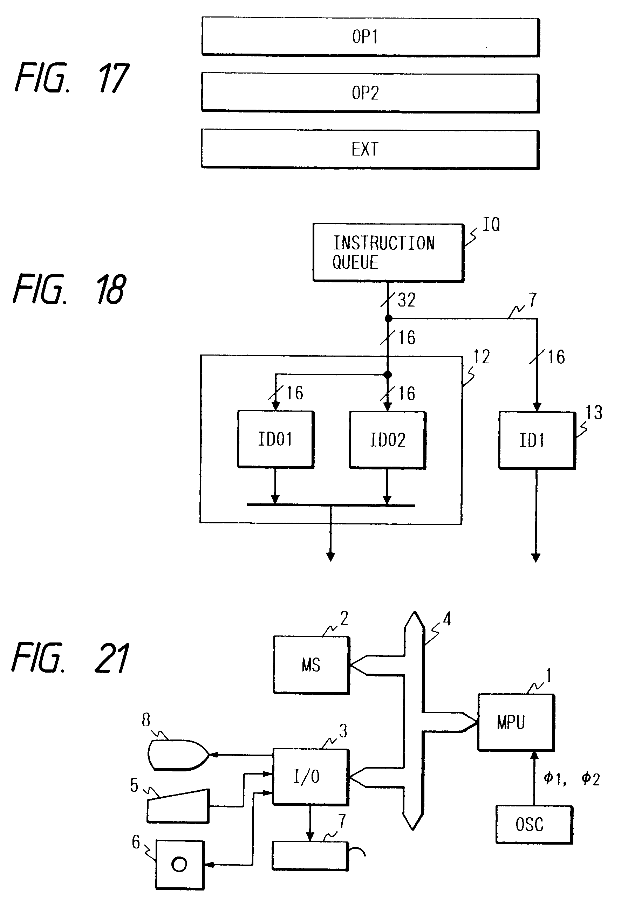

In Figure 19(a) and 19(b), symbols ***std0*** and ***std1*** represent selection signals for selecting one of the selectors ***16, 17*** to cause either the control signal from the instruction decoder or the control signal from the micro-ROM to be stored in the control information buffer ***18, 19*** in the next cycle. Symbol ***itypi*** (i = 0, 1, ...) represents a control signal which specifies whether the instruction decoded by the decoder ***12***, ***13***, when it is of a type as shown in Figure 17, is the first operation code (1st op code) or the second op code; symbol ***dsrci*** represents a control signal showing a register number to read from; ***etypi*** is a control signal representing the kind of calculation; ***esizi*** is a control signal indicating the size of calculation; ***memi*** is a control signal showing the presence or absence of memory access; ***asizi*** is a control signal showing the memory access size; ***rw*** is a control signal representing a memory read/write; ***sregi*** is a control signal representing a register number to write into; and ***madr*** is a micro-ROM address from which to read next and which is fed to the micro-ROM ***14***.

Figure 20 shows an example of the output field configuration of the micro-ROM. It includes: a control information field (control signal) for pipe 0 and pipe 1 ***dsrci, etypi, esizi, memi, asizi, rw, sregi, madr*** (i = 0, 1, 2, ...) having the same configuration as the output of the instruction decoders ***12***, ***13***; a control signal ***str*** indicating in which pipe the processing has ended; and a control signal ***misc*** specifying whether the memory access unit ***34*** transforms a logical address into a physical address for the purpose of controlling special instructions.

In the microprocessor of this embodiment, the pipeline processing executes instructions in five stages ***I, D, E, A, S*** for each of pipe 0 and pipe 1 (these five stages are called an instruction cycle). To describe in more detail, the stage ***I*** fetches an instruction, stage ***D*** decodes the instruction and reads from the micro-ROM and the register, stage ***E*** performs calculation, stage ***A*** accesses memory, and stage ***S*** stores data in the register. Each of these stages is performed in one cycle before proceeding to the next stage.

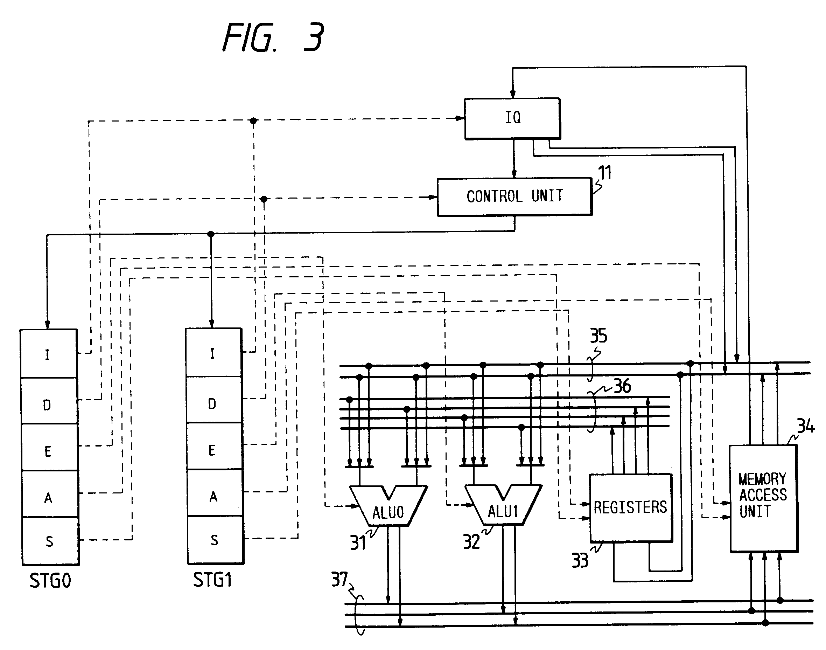

Next, the operation of the pipelines in the microprocessor is explained by referring to Figure 3.

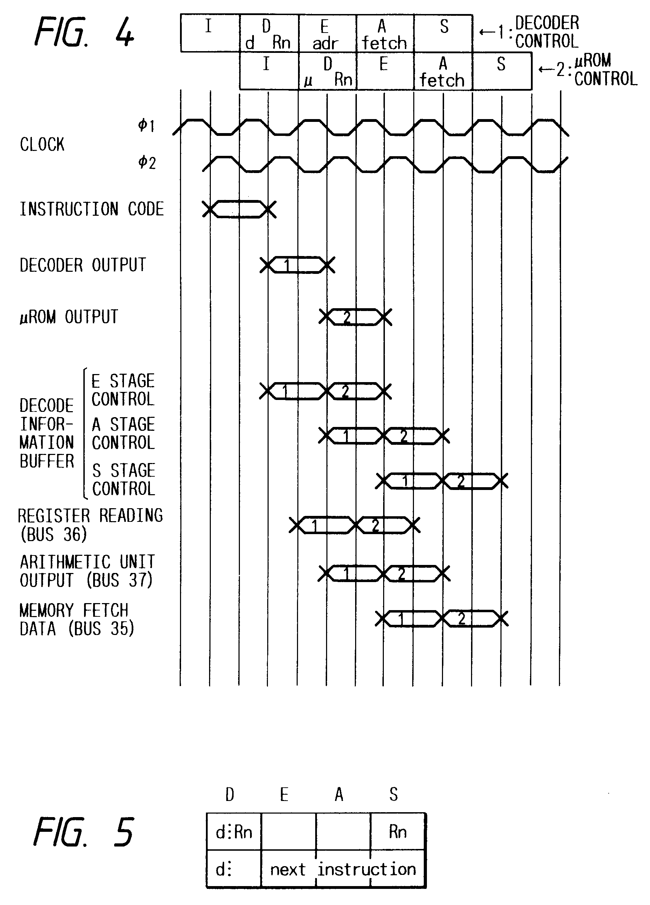

Figure 3 shows stage configurations ***STG0*** and ***STG1*** for the first pipeline pipe 0 and the second pipeline pipe 1. Figure 4 shows a timing chart for the operation.

The broken line in Figure 3 represents control signals output from the control unit ***11*** to hardware that operates in each stage of the pipelines. These control signals are supposed to be output from the control unit ***11*** according to the timing of each stage. However, for the purpose of making it easy to understand the correspondence between the pipelines and hardware as well as how the control unit controls the pipeline as a whole, the configuration is depicted as shown.

First, let us explain about the instruction cycle of one of the pipelines. The instruction queue ***IQ*** holds instruction codes taken from memory and, at stage ***I***, sends two consecutive instructions to the control unit ***11*** according to a request from the control unit ***11***. The operation of fetching instruction from memory is performed as necessary when the external bus is not used by an operand fetch. The instruction fetch is ended when the instruction queue ***IQ*** is full.

In the second stage ***D***, the decoders ***12***, ***13*** in the control unit ***11*** decode the two consecutive instructions at the same time to generate control signals for the stages ***E, A, S*** of pipe 0 and pipe 1. The generated control signals are latched by the buffers ***18***, ***19*** in the control unit and then output to the arithmetic execution unit ***30*** according to clocks ***φ1***, **φ*2*** at the execution timing of each stage ***E***, ***A***, ***S***. That is, the control signal for the stage ***E*** is immediately output, the control signal for the stage ***A*** is output with a delay of one clock cycle, and the control signal for the stage ***S*** is output with a delay of two clock cycles. The control signals for the stages ***I, D*** are immediately output to control the stages ***I***, ***D*** in the next instruction cycle. The next instruction cycle means a series of operations performed one clock cycle after the current instruction cycle being executed in each stage.

The stage ***I*** in the next instruction cycle is controlled by outputting to the instruction queue ***IQ*** a pointer indicating the start address of an instruction code to be transferred next. When the result of decoding the instruction in the stage ***D*** has found that the instruction uses the micro-ROM, the control unit controls itself to read out control information from the micro-ROM ***14*** during the stage ***D*** in the next instruction cycle. When the decoded instruction is found to require reading from the register, data in the register unit ***33*** is transferred through an internal bus ***36*** to the processors ***31***, ***32*** during the latter half of the stage ***D***. When the instruction code includes immediate data and displacement of addressing mode, they are separated from the instruction code - which is supplied to the control unit ***11*** -and are directly transferred from the instruction queue ***IQ*** onto the internal bus ***35***, from which they are further transferred to the arithmetic execution unit ***30***.

In the third stage ***E***, the arithmetic logic unit 31, 32 execute operations on the data supplied from the internal bus ***35*** and put the calculated results on the internal bus ***37***.

In the fourth stage ***A***, the memory access unit ***34*** accesses memory according to the data on the internal bus ***37***. In the case of memory fetch, the memory access unit ***34*** puts the data fetched from the main storage ***2*** on the internal bus ***35***. When the result of calculation produced in the stage ***E*** is to be stored in the register unit ***33***, the data on the internal bus ***37*** is directly output to the internal bus ***35*** bypassing the memory access unit ***34***.

In the fifth stage ***S***, the data on the internal bus ***35*** is stored in the register unit ***33***.

Next, the pipeline processing will be described.

The two consecutive instructions taken into the instruction queue ***IQ*** are supplied to the instruction decoders ***12***, ***13***. When the two decoded instructions are executable without using the micro-ROM ***14***, the instruction decoders ***12***, ***13*** output control signals for pipe 0 and pipe 1 and at the same time tell the selector control unit ***15*** to select decoder outputs in the next cycle, too. As a result, in the next cycle the succeeding two instructions are decoded during the stage ***D*** and the decoder outputs are used to control the pipelines.

When the instruction for pipe 0 or pipe 1 uses the micro-ROM ***14***, the instruction decoder ***12*** or ***13*** outputs a control signal for the currently executed pipeline and at the same time outputs an address of the micro-ROM ***14*** to tell the selector control unit ***15*** to select an output of the micro-ROM ***14***. As a result, in the next cycle, the pipelines will be controlled by control signals read out from the micro-ROM ***14***.

In the processing performed according to the output of the micro-ROM ***14***, control signals for two pipelines are read out from the micro-ROM ***14***. The micro-ROM outputs give the selector control unit ***15*** a micro-ROM address to read from next and also request it to select the micro-ROM outputs in the next cycle too. At the final step of the microprogram, the selector control unit ***15*** is requested to select the decoder output in the next cycle. As a result, after the micro-processing is finished, the next instruction can be executed.

Instructions that are executed without using the micro-ROM ***14*** are generally ones that can be executed in one instruction cycle. Being executable in one instruction cycle means that the function of the instruction can be realized by executing through the five stages once, from stage ***I*** to stage ***S***. Because the pipeline processing is performed, this means in practice that each instruction can be processed in one clock cycle. Instructions that use the micro-ROM ***14*** are generally those that require two or more instruction cycles for execution. In other words, they require execution of five stages from stage ***I*** to stage ***S*** two or more times. Such instructions often require a large amount of data and complex processing. In the following, instructions that can be executed within one cycle is referred to as simple instructions and those requiring two or more cycles complex instructions. Although some simple instructions may take two or more cycles because of address calculation and memory access depending on the addressing mode, the "one cycle" mentioned above is meant to be the shortest execution time.

When the instructions processed by pipe 0 and pipe 1 (instructions decoded by the decoder ***12***, ***13***) are both simple instructions, an output of the instruction decoder ***12*** or ***13*** is selected in the next instruction decode cycle too, according to the selector control signal ***st*** from the selector control unit ***15***. When the instruction for pipe 0 (instruction decoded by the decoder ***12***) is a simple instruction and that for pipe 1 (instruction decoded by the decoder ***13***) is a complex instruction, the selectors ***16***, ***17*** select an output of the micro-ROM ***14*** from the next cycle onward, so that the instruction for pipe 1 decoded by the decoder ***13*** is processed by using two pipes simultaneously.

Conversely, when the instruction for pipe 0 (instruction decoded by the decoder ***12***) is a complex instruction, the execution of the instruction for pipe 1 decoded by the decoder ***13*** is delayed and only started after the micro-processing of the instruction for pipe 0 has been completed. That is, the selector control unit ***15*** sends to the control information buffer ***19*** a control signal ***vs*** indicating that the pipe 1 is invalid. The control signal held in the control information buffer ***19*** is not fed to the arithmetic execution unit ***30***.

After the micro-processing of the instruction for pipe 0 has been finished, the instruction that was decoded by the decoder ***13*** for pipe 1 is again decoded by the decoder ***12*** for pipe 0 or the decoder ***13*** for pipe 1. Which decoder is used depends on in which pipe the micro-processing has ended. The control information read from the micro-ROM ***14*** normally controls two pipelines. But when the final step of the micro-processing is executable by pipe 0 only, it is possible to start executing the next instruction with pipe 1 by so instructing the pipelines by the micro-ROM ***14***, thereby preventing the pipelines from being idle. When the final step of the microinstruction requires the both pipes, the instruction queue ***IQ*** is requested to feed the instruction which was decoded by pipe 1 to, this time, the decoder ***12*** for pipe 0.

Figure 5 through Figure 11 show examples of pipeline processing of simple instructions. While the use of pipeline varies depending on the kind of instructions and the addressing mode, there are basically seven types of pipeline use as shown in Figure 5 to 11. In each figure, the upper row represents the stages of pipe 0 and the lower row the stages of pipe 1.

### (a) Figure 5 represents a case of an instruction calling for register-to-register transfer.

In the latter half of the stage ***D***, data read from a specified register ***Rn*** in the register unit ***33*** is output onto the internal bus ***36***. In the stage ***E*** the data on the internal bus ***36*** is sent to the internal bus ***37*** bypassing the arithmetic logic unit 31 or 32. In the stage A, the data on the internal bus ***37*** is output to the internal bus ***35*** bypassing the memory access unit ***34*****.** Then, in the stage ***S*** the data on the internal bus ***35*** is stored in a specified register ***Rn***

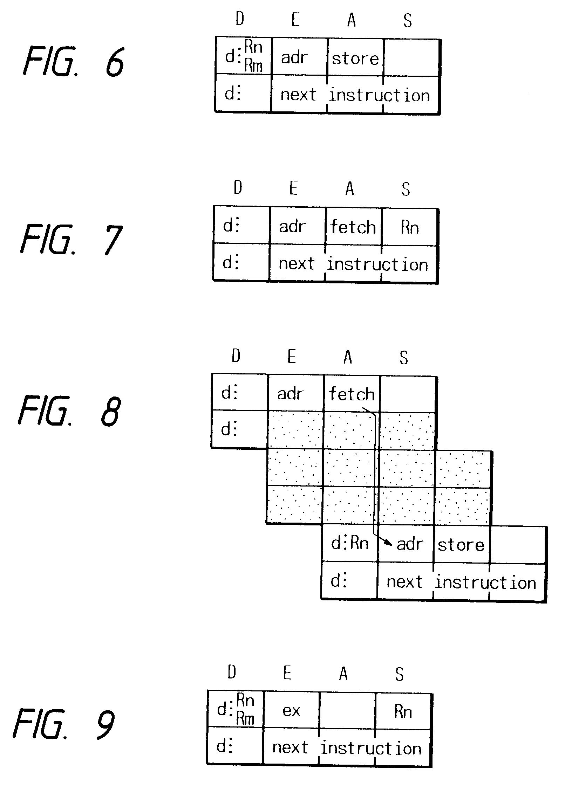

### (b) Figure 6 represents a case of an instruction calling for register-to-main storage (memory) transfer.

In the latter half of the stage ***D***, data is read from registers ***Rm***, ***Rn*** specified by the instruction and is output onto the internal bus ***36***. At the stage ***E***, the data read from the specified register ***Rm*** is passed through the arithmetic logic unit ***31*** onto the internal bus ***37***. The data read from the specified register ***Rn*** is operated upon by the arithmetic logic unit 31, which puts the calculated result on the internal bus ***37*** as a store address for the data read from the specified register ***Rm***. In the stage ***A***, the memory access unit ***34*** stores the data on the internal bus ***37*** into memory according to the store address. In the stage ***S***, nothing is done. While the above embodiment reads data from the specified register ***Rn*** for generating a store address, it is possible to not use this register but directly supply the store address from the instruction queue ***IQ*** to the internal bus ***27***.

### (c) Figure 7 represents a case of an instruction calling for memory-to-register transfer.

In the stage ***D***, the instruction queue ***IQ*** sends a register value and a displacement value necessary for address calculation to the internal bus ***36***. The stage ***E*** performs only the address calculation by the arithmetic logic unit 31 or ***32*** and outputs the result onto the internal bus ***37***. In the stage ***A*** the memory access unit ***34*** accesses memory by using the data on the internal bus ***37*** as an address. The memory access unit ***34*** then fetches data from the main storage ***2*** and places it on the internal bus ***35***. The stage ***S*** stores the data on the internal bus ***35*** into a register ***Rn*** specified by the instruction.

### (d) Figure 8 represents a case of an instruction calling for memory-to-memory transfer.

Since the memory-to-memory transfer instruction has two operation codes of 16 bits each, it must be decoded in two steps. After the first decoding, a control to take data from memory is performed. The second decoding leads to a control for storing data into memory. The process up to the memory access unit ***34*** outputting the data taken out from memory onto the internal bus ***35*** is similar to that in the case of Figure 7. The processing for passing the data on the internal bus ***35*** through the arithmetic logic unit 31 or 32 and storing it into memory is the same as in the case of Figure 6. Since the microprocessor waits until the data fetched by the memory access unit ***34*** is available for stage ***E***, there is a stage where nothing is done. The control to insert the idle stage is performed by the control unit ***11*** based on the result of the decoding by the instruction decoder ***12***, ***13***.

### (e) Figure 9 represents a case of an instruction calling for register-to-register calculation.

In the second half of the stage ***D***, data is read from registers ***Rm***, ***Rn*** specified by the instruction and is output onto the internal bus ***36***. In the stage ***E***, the data on the internal bus ***36*** is fed to the arithmetic logic unit 31 which performs operations on the data and outputs the result onto the internal bus ***37***. The stage ***A*** passes the data on the internal bus ***37*** through the memory access unit ***34*** onto the internal bus ***35***. The stage ***S*** stores the data on the internal bus ***35*** into a register ***Rn*** specified by the instruction.

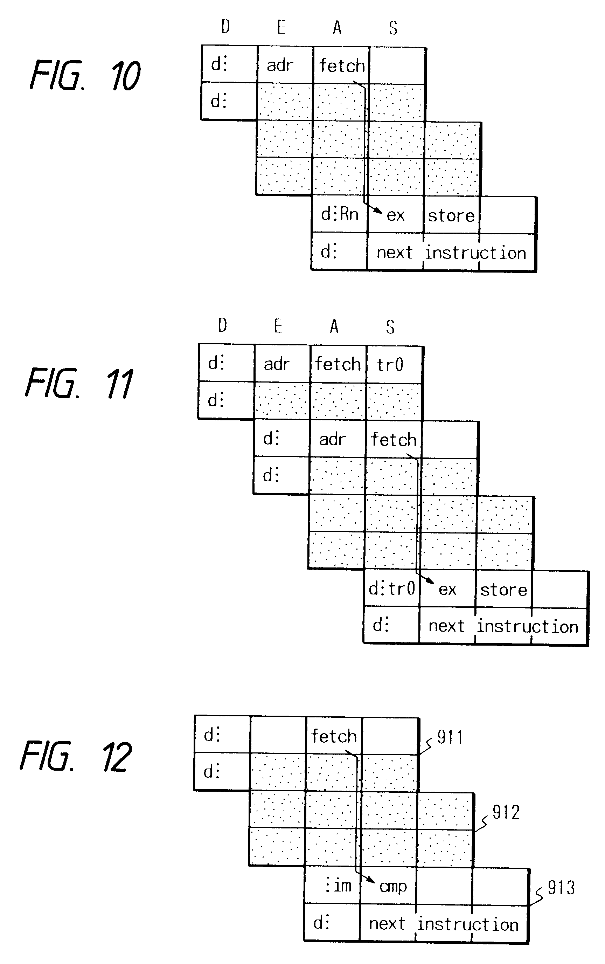

### (f) Figure 10 represents a case of an instruction calling for register-to-memory calculation.

The processing performed by the first stage is to take an operand from memory. That is, like the instruction of Figure 7, the address calculation is done at the stage ***E*** and the data is fetched from memory at the stage ***A***. The fetched data is output to the internal bus ***35***. At the same time, the data contained in the register ***Rn*** specified by the instruction is also output onto the internal bus ***35***. In the stage ***E***, the data on the internal bus ***35*** is fed to the arithmetic logic unit 31 where it is operated upon. Then the stage ***A*** stores the result of calculation into memory as with the instruction of Figure 6.

### (g) Figure 11 represents a case of an instruction calling for memory-to-memory calculation.

Since this instruction has two operation codes of 16 bits each, it must be decoded in two steps. In the first decoding operation, data read from memory is fetched by the memory access unit ***34*** and then stored in a specified register ***tro*** in a register specified by the instruction. In the second decoding, another data is read from memory and fetched by the memory access unit ***34***. Then, the data in the specified register ***tro*** and the data fetched by the memory access unit ***34*** are output onto the internal buses ***35***, ***36*** and operated upon by the arithmetic logic unit 31 or 32. At the last step the calculation result is stored into memory at an address specified by the instruction. This control is performed according to the signal read from the micro-ROM ***14***.

Figure 12 shows the pipeline processing of a CMP instruction which calls for comparing data in memory with immediate data in the instruction and reflecting the result of comparison on a flag. This processing is similar to the register-to-memory calculation instruction of Figure 10 except that the result is reflected on a flag in the arithmetic logic unit 31 or 32 without being stored in register or memory.

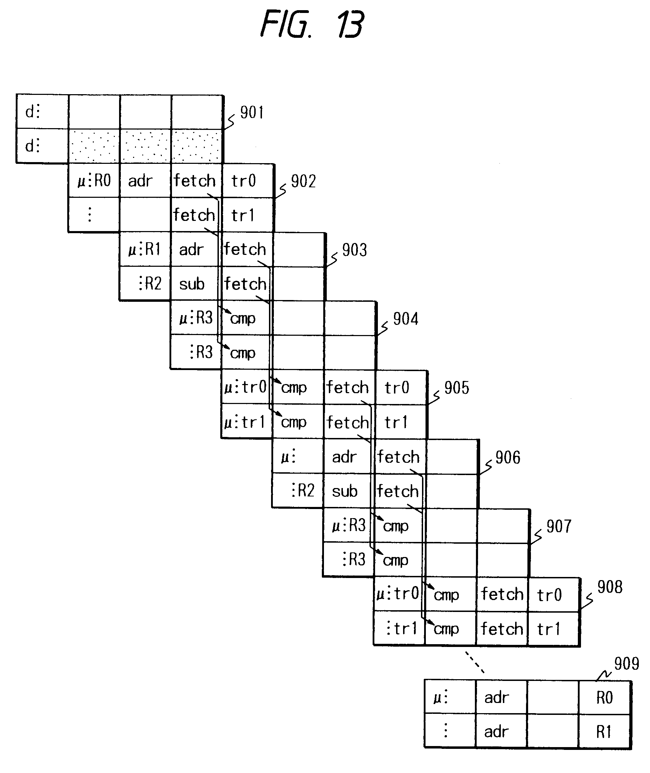

Figure 13 represents a case of a complex instruction that uses the micro-ROM ***14***. It shows the pipeline processing of a CMP instruction that calls for reading data from two memory areas successively 16 bits at a time; comparing the two retrieved data; and then, when a certain condition is met, setting the associated address in the register before ending the instruction.

In more detail, this CMP instruction involves: comparing data ***src1*** fetched from a memory area, whose head address is specified by a register ***R0***, with data ***src2*** fetched from a memory area, whose starting address is given by a register ***R1***; and terminating the processing (1) when the data ***src1*** and data ***src2*** do not agree, (2) when a certain condition is established between the data ***src1*** and the value of a register ***R3***, or (3) when the compare operation has been done for the number of data specified by a register ***R2***. Before being ended, the instruction requires the address next to the data last compared to be stored in the registers ***R0***, ***R1***.

The instruction decoder ***12*** or ***13***, when it decodes an instruction CMP, recognizes it to be a complex instruction, outputs control information for the first stage and also sends a micro-ROM address from which to read next to the micro-ROM ***14***. From this point onward, the control is transferred to the microprogram sequence and, until a series of processing is completed, the two pipelines are controlled simultaneously according to information read from the micro-ROM ***14***. Since the data fetch and compare operations can be executed 64 bits at one time by using two pipelines, the operation speed is four times higher than that of the conventional system which performs operations 16 bits at a time.

In more concrete terms, the first step ***901*** decodes an instruction, starting the microprogram processing. The succeeding steps, from step ***902*** and later, control the pipelines according to control information read from the micro-ROM. The step ***902*** fetches 64 bits of data from memory using the value of the register ***R0*** as an address and stores it in 32-bit registers ***tr0***, ***tr1*** in the register unit ***33***. The step ***903*** fetches 64 bits of data from memory using the value of the register ***R1*** as an address, at the same time decrements the value of the register ***R2*** and stops fetching data when ***R2*** becomes negative. In ending this processing, the ROM address from which to read next is changed before transferring the control to the execution of the step ***909***. The step ***904*** compares the data, which was fetched and output onto the internal bus ***35*** by the step ***902***, with the value of the register ***R3***. When the result of comparison satisfies a certain condition, the processing is ended. In step ***905***, the data, which was fetched and output onto the internal bus ***35*** by the step ***903***, is compared with the value of registers ***tr0***, ***tr1*** and, if they disagree, the processing is stopped. The steps from ***906*** and later repeat the processing of step ***903*** to ***905*** until the terminating condition is established. The step ***909*** is a step to perform the terminating processing, which stores the address next to the data last compared into the registers ***R0***, ***R1*** before ending the micro-processing.

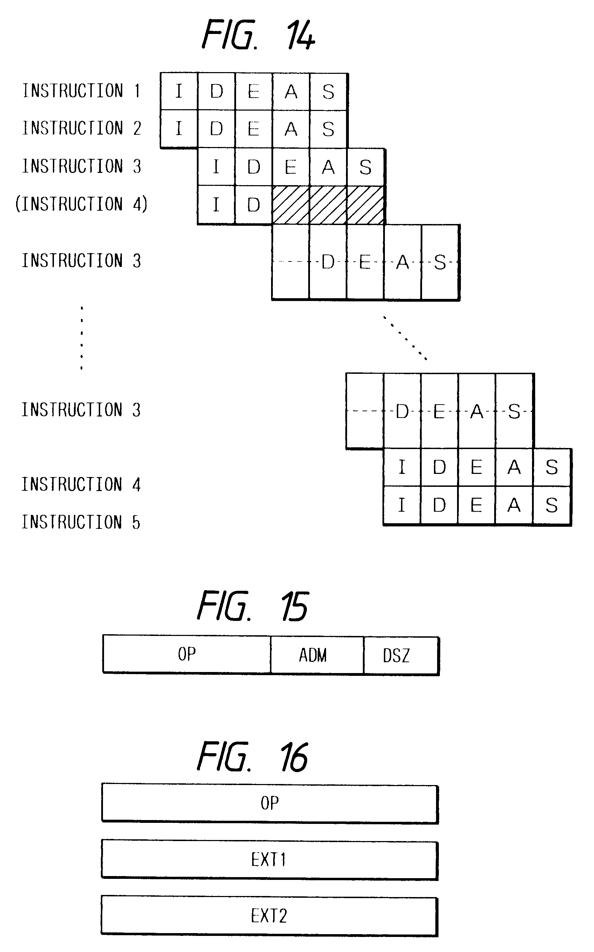

Figure 14 shows an example of pipeline processing when simple instructions and complex instructions are mixed. In this case, instruction 1 and 2 and instruction 4 and 5 are simple instructions that can be executed parallelly in each pair, and instruction 3 is a complex instruction which performs complex processing using the micro-ROM.

The microprocessor, after decoding the instruction 1 and 2 in one cycle, decodes the instruction 3 and 4 simultaneously to recognize that the instruction 3 is an instruction that uses the micro-ROM. The microprocessor therefore cancels the decoded result of the instruction 4. This cancellation is done by the selector control unit ***15*** prohibiting the output of the control information buffer ***19***. Then, the instruction 3 is decoded again to access the micro-ROM for the first time and start the micro-processing. After the micro-processing of instruction 3 is finished, the last step of the micro-processing calls for fetching the next instruction. Since the instruction 3 is processed using both pipe 0 and pipe 1, the next stage ***I*** fetches the previously canceled instruction 4 and the next instruction 5 at the same time. Because the instruction 4 and the instruction 5 are simple instructions, they are parallelly executed using pipe 0 and pipe 1.

Figure 15 to 17 show example configurations of instructions.

Figure 15 and 16 show abbreviated instructions whose operation codes (hereinafter referred to as op codes) fall within one word (16 bits). Figure 17 show a general instruction whose op code consists of two words (32 bits).

In these figures, symbol ***OP*** designates an op code field where an op code is contained, ***ADM*** an addressing mode specification field that contains a code specifying an addressing mode, ***DSZ*** a data size specification field that contains a code specifying a data size, and ***EXT*** an extension field which accepts displacement values and immediate values.

In the case of Figure 16, when the decoder ***12*** or ***13*** decodes the first 16 bits of the instruction, it finds that the next 32 bits are contained in the extension field and not necessary to decode. So the decoder outputs control information for pipeline processing and does not perform decoding of the next 32 bits.

In the microprocessor of this embodiment, the abbreviated instructions are supplied to the decoder ***12*** of pipe 0 or the decoder ***13*** of pipe 1 and processed by a single pipeline. As to the general instructions, while the first op code ***OP1*** is decoded by both decoders ***12*** and ***13*** of pipe 0 and pipe 1, the second op code ***OP2*** is decoded only by the decoder ***12*** of pipe 0, as shown in Figure 17.

Figure 18 shows the internal configuration of the instruction decoders ***12***, ***13***.

In this embodiment, the decoder ***12*** of pipe 0 has a first op code decoder ***ID01*** and a second op code decoder ***ID02***. The second op code in the 32-bit instruction (Figure 17) made up of two 16-bit op codes is decodable only by the second op code decoder ***ID02***. The decoder ***13*** of pipe 1 has the same configuration as the first op code decoder ***ID01*** for pipe 0. An instruction code sent out from the instruction queue ***IQ*** 32 bits at a time (equal to two instructions) is divided into 16-bit sections, with the first 16 bits fed to the decoder ***12*** of pipe 0 and the second 16 bits to the decoder ***13*** of pipe 1.

Suppose that the first op code is entered into the decoder ***12*** of pipe 0 and the second op code into the decoder ***13*** of pipe 1. The first op code is decoded by the first op code decoder ***ID01*** and the output of the decoder ***ID01*** cancels the result of the decoding done by the decoder ***13*** of pipe 1 so that it cannot be executed. The result of decoding the first op code done by the decoder ***12*** is held in the control information buffer ***18***. Finding that the fetch instruction of pipe 0 is the first op code, the control unit ***11*** sends a pointer representing the start address of the second op code to the instruction queue ***IQ***. In response to that, the instruction queue ***IQ*** transfers 32 bits of code beginning with the second op code to the control unit ***11*** during the next stage ***I***. As a result, the second op code is decoded by the second op code decoder ***ID02*** in the decoder ***12*** of pipe 0 for execution. This process apparently seems to degrade the performance, but the instructions having two op codes are originally intended to enhance the versatility of the addressing mode and are not expected to make improvements in terms of performance. This process, however, has an advantage of reduced area realized by eliminating a second op code decoder from the decoder ***13*** of pipe 1.

When, after the first op code is decoded in pipe 0, the second op code is supplied to the decoder ***12*** during the next stage ***I***, the second op code enters into both the first op code decoder ***ID01*** and the second op code decoder ***ID02***. The result of decoding done by the second op code decoder ***ID02*** is selected by the selector ***16***, blocking and invalidating the decoded result from the first op code decoder ***ID01***. At this time, if the next instruction is a simple instruction, it is decoded by the decoder ***13*** of pipe 1 and executed by pipe 1.

Suppose the first op code is entered into the decoder ***13*** of the pipe 1 and the second op code is entered into the decoder ***12*** of pipe 0. The first op code and the second op code are decoded simultaneously by the decoder ***13*** of pipe 1 and the first op code decoder ***ID01*** of pipe 0, respectively, and executed at the same time.

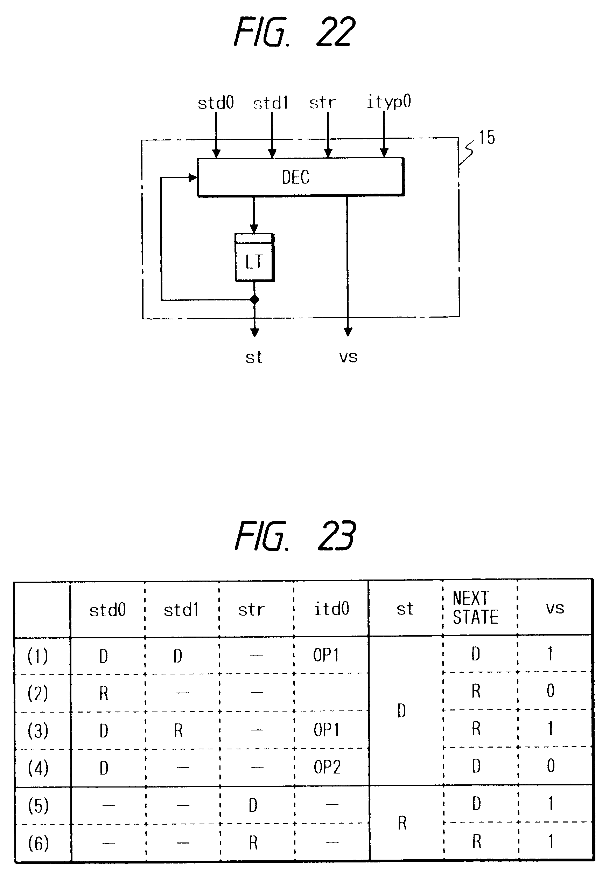

Figure 22 shows an example configuration of the selector control unit ***15*** according to this invention. The selector control unit is supplied with control signals ***std0*** and ***ityp0*** from the decoder ***12*** and with a control signal ***std1*** from the decoder ***13*** and a control signal ***str*** from the micro-ROM. The selector control unit ***15*** has a decoding unit ***DEC*** and a latch unit ***LT***. The decoding unit ***DEC*** decodes the control signals received and generates control signals ***st*** and ***vs***. The latch unit ***LT*** holds for one cycle the control signal ***st*** specifying which output - one from the decoders ***12***, ***13*** or-one from the micro-ROM ***14*** - the selectors ***16***, ***17*** should select in the next cycle. After one cycle, the latch unit ***LT*** outputs the control signal ***st***.

Figure 23 is a table showing the relationship between the control signals taken into or out of the selector control unit ***15***. Symbol ***D*** indicates that the selectors ***16***, ***17*** select and output control signals from the decoders ***12***, ***13***. Symbol ***R*** means that the selectors ***16***, ***17*** select and output a control signal from the micro-ROM ***14***. Symbol ***OP1*** shows that the decoder ***12*** has decoded the first op code. Symbol ***OP2*** shows that the decoder ***12*** has decoded the second op code. The control signal ***st*** indicates which control signal, one from the decoders ***12***, ***13*** or one from the micro-ROM ***14***, the selectors ***16***, ***17*** has selected in the current decode cycle (first decode cycle). Symbol ***next state*** shows which of the control signals, either from the decoders ***12***, ***13*** or from the micro-ROM ***14***, the selectors ***16***, ***17*** will select in the next decode cycle (a decode cycle one cycle after the first decode cycle). When the control signal ***vs*** is "1," the control signal held in the control information buffer ***19*** is output to the arithmetic execution unit ***30*** at a specified timing. When the control signal ***vs*** is "0," the control signal held in the control information buffer ***19*** is not output to the arithmetic execution unit ***30***.

In the row (1) of Figure 23, the selector control unit ***15*** is supplied with control signals ***std0 (D)*** and ***std1 (D)***, which specify that the selectors ***16***, ***17*** select control signals from the decoders ***12***, ***13***. The selector control unit ***15*** is also supplied with a control signal ***itd0 (OP1)***, which indicates that the decoder ***12*** has decoded the first op code. In the current cycle, for the selectors ***16***, ***17*** to select control signals from the decoders ***12***, ***13***, the selector control unit ***15*** is outputting a control signal ***st (D)***. Since the control signal ***vs*** from the selector control unit ***15*** is "1," the control signal held in the control information buffer ***19*** is output to the arithmetic execution unit ***30*** at a specified timing. For the selectors ***16***, ***17*** to select the control signals from the decoders ***12***, ***13*** also in the next cycle, a ***next state (D)*** is set in the latch unit ***LT***. Hence, in the next cycle too, the control information buffers ***18***, ***19*** are supplied with control signals from the decoders ***12***, ***13***.

In the row (2) of Figure 23, the selector control unit ***15*** is supplied with a control signal ***std0 (R)***, which requires that the selector ***16*** select a control signal from the micro-ROM ***14***. At this time, in order for the selector ***16*** to select the control signal from the decoder ***12*** in the current cycle, the selector control unit ***15*** is outputting the control signal ***st (D)***. To make the selector ***16*** select a control signal from the micro-ROM ***14*** in the next cycle, however, a ***next state (R)*** is set in the latch unit ***LT***. Therefore, from the next cycle on, the control information buffers ***18***, ***19*** are supplied with control signals from the micro-ROM ***14***. Since the control signal ***vs*** from the selector control unit ***15*** is "0," the control signal held in the control information buffer ***19*** is not output to the arithmetic execution unit ***30***.

In the row (3) of Figure 23, the selector control unit ***15*** is supplied with a control signal ***std0 (D)***, which requires that the selector ***16*** select a control signal from the decoder ***12***, and also with a control signal ***std1 (R)***, which requires the selector ***17*** to select the control signal from the micro-ROM ***14***. It is also supplied with a control signal ***itd0 (OP1)***, which indicates that the decoder ***12*** has decoded the first op code. In the current cycle, the selector control unit ***15*** is issuing a control signal ***st (D)*** to cause the selectors ***16***, ***17*** to select the control signals from the decoders ***12***, ***13***. Since the ***vs*** from the selector control unit ***15*** is "1," the control signal held in the control information buffer ***19*** is output to the arithmetic execution unit ***30*** at a specified timing. A next state ***(R)*** is set in the latch circuit ***LT*** so as to cause the selectors ***16***, ***17*** to select control signals from the micro-ROM ***14*** in the next cycle. Hence, from the next cycle onward, the control information buffers ***18***, ***19*** are supplied with control signals from the micro-ROM ***14***.

In the row (4) of Figure 23, the selector control unit ***15*** is supplied with a control signal ***std0 (D)***, which specifies that the selector ***16*** select a control signal from the decoder ***12***, and with a control signal ***itd0 (OP2)***, which indicates that the decoder ***12*** has decoded the second op code. In the present cycle, the selector control unit ***15*** is outputting a control signal ***st (D)***, which causes the selectors ***16***, ***17*** to select the control signals from the decoders ***12***, ***13***. The latch unit ***LT*** is set with a control signal ***st (D)*** to cause the selector ***16*** to select a control signal from the decoder ***12*** in the next cycle. Therefore, in the next cycle too, the control information buffers ***18***, ***19*** receive control signals from the decoders ***12***, ***13***. Since the ***vs*** from the selector control unit ***15*** is "0," the control signal held in the control information buffer ***19*** is not output to the arithmetic execution unit ***30***.

In the row (5) of Figure 23, the selector control unit ***15*** is supplied with a control signal ***str (D)***, which requires that the selectors ***16***, ***17*** select control signals from the decoders ***12***, ***13***. In the current cycle, the selector control unit ***15*** is outputting a control signal ***st (R)***, which causes the selectors ***16***, ***17*** to select control signals from the micro-ROM ***14***. Since the ***vs*** from the selector control unit ***15*** is "1," the control signal held in the control information buffer ***19*** is output to the arithmetic execution unit ***30*** at a specified timing. The latch circuit ***LT*** is set with a ***next stage (D)*** to cause the selectors ***16***, ***17*** to select control signals from the decoders ***12***, ***13*** in the next cycle. Hence, from the next cycle onward, the control information buffers ***18***, ***19*** receive control signals from the decoders ***12***, ***13***.

In the row (6) of Figure 23, the selector control unit ***15*** is supplied with a control signal ***str (R)***, which requires that the selectors ***16***, ***17*** select control signals from the micro-ROM ***14***. In the current cycle, the selector control unit ***15*** is outputting a control signal ***st (R)***, which causes the selectors ***16***, ***17*** to select control signals from the micro-ROM ***14***. Since the ***vs*** from the selector control unit ***15*** is "1," the control signal held in the control information buffer ***19*** is output to the arithmetic execution unit ***30*** at a specified timing. A ***next state (R)*** is set in the latch circuit ***LT*** to cause the selectors ***16***, ***17*** to select control signals from the decoders ***12***, ***13***. Therefore, in the next cycle too, the control information buffers ***18***, ***19*** are supplied with control signals from the micro-ROM ***14***.

Figure 21 is a block diagram showing an example system configuration using a microprocessor of this invention.

This microprocessor system includes a microprocessor body ***1***, a main storage ***2***, an input/output device ***3***, and an interface bus ***4*** connecting these. The input/output device ***3*** is connected with an input device ***5*** such as a keyboard, a magnetic storage device ***6*** as a secondary storage device storing programs and data, and also with a printer ***7*** and a CRT display ***8*** as output devices. Programs and data contained in the secondary storage device ***6*** are loaded into the main storage ***2*** through the input/output device ***3***. The microprocessor ***1*** reads the programs (macroinstructions) from the main storage ***2*** for execution. The result of execution is stored in the main storage ***2*** and also output to the printer ***7*** and CRT display ***8*** through the input/output device ***3***, as necessary.

As described above, a microprocessor having a plurality of pipelines, which include a plurality of instruction decoders and instruction execution units, is provided with: a first function whereby the pipelines are used independently of each other to execute a plurality of instructions parallelly; and a second function whereby the pipelines are used simultaneously to execute a single instruction. With this configuration, simple instructions, each executable in one cycle, can be executed parallelly by using a plurality of pipelines independently. Complex instructions, each requiring a large amount of data and complex processing, can be executed at high speeds by using a plurality of pipelines simultaneously.

The invention accomplished by this inventor has been described in detail in conjunction with embodiments. This invention is not limited to the aforementioned embodiments but various modifications can be made without departing from the spirit of the invention. For example, while in the above embodiments only the instruction decoder ***12*** of pipe 0 is formed of the first op code decoder ***ID01*** and the second op code decoder ***ID02***, it is possible to form the instruction decoder ***13*** of pipe 1 so that it can decode both the first op code and the second op code. In processing a complex instruction, the above embodiment does not feed the control signal held in the control information buffer ***19*** to the arithmetic execution unit ***30***. Rather than disabling the output of the control information buffer ***19***, the selector ***17*** may be made not to output control signals from the decoder ***13*** and the micro-ROM ***14*** to the control information buffer ***19*** and the arithmetic execution unit ***30***.

The above description has focused on a case where the invention is applied to the CISC type microprocessor, a field of application from which the invention has originated. It is, however, noted that the invention is not limited to this application alone but may be widely applied to general microprocessors that employ pipeline processing.

Representative advantages of this invention may be summarized as follows.

Simple instructions, each executable in one cycle, can be executed parallelly by using a plurality of pipelines independently. Complex instructions, each requiring a large amount of data and complex processing, can be executed at high speeds by using a plurality of pipelines simultaneously.

## Claims

1. A microprocessor comprising
first and second decoding means (12, 13) for decoding instructions supplied,
a micro-ROM (14) to store microinstructions,
control means (15) for receiving a first control signal (std0) decoded by the first decoding means (12) and a second control signal (std1) decoded by the second decoding means (13) and for outputting one of first and second switching signals,
a first selector (16) for receiving a third control signal decoded by the first decoding means (12) and a first microcontrol signal from the micro-ROM (14), the first selector (16) outputting the third control signal when it receives the first switching signal and outputting the first microcontrol signal when it receives the second switching signal,
a second selector (17) for receiving a fourth control signal decoded by the second decoding means (13) and a second microcontrol signal from the micro-ROM (14), the second selector (17) outputting the fourth control signal when it receives the first switching signal and outputting the second microcontrol signal when it receives the second switching signal,
first calculating means (31) for performing specified arithmetic operations according to either the third control signal from the first selector (16) or the first microcontrol signals, and
second calculating means (32) for performing specified arithmetic operations according to either the fourth control signal from the second selector (17) or the second microcontrol signal.

2. The microprocessor of claim 1, further comprising
a first buffer (18) for holding either the third control signal from the first selector (16) or the first microcontrol signal and outputting the control signal held therein at a specified timing to the first calculating means (31), and
a second buffer (19) for holding either the fourth control signal from the second selector (17), or the second microcontrol signal and for outputting the control signal held therein at a specified timing to the second calculating means (32).

3. The microprocessor of claim 2, wherein the first and second decoding means (12, 13) each feed a microaddress (madr) to the micro-ROM (14) to cause the micro-ROM to output a microcontrol signal corresponding to the instruction supplied.

4. The microprocessor of claim 3, wherein the control means (15) outputs the second switching signal at a specified timing if the first control signal (std0) from the first decoding means (12) specifies selection of the microcontrol signal from the micro-ROM (14).

5. The microprocessor of claim 3, wherein the control means (15) outputs the second switching signal at a specified timing if the second control signal (std1) from the second decoding means (13) specifies selection of the control signal from the micro-ROM (14).

6. The microprocessor of claim 4, wherein the control means (15) prohibits output from the second buffer (19) if the first control signal (std0) from the first decoding means (12) specifies selection of the control signal from the micro-ROM (14).

7. The microprocessor of claim 3, wherein the instruction supplied has first and second operation codes and the first control signal (std0) prohibits output from the second buffer (19) if it indicates that the first decoding means (12) has decoded the second operation code.

8. The microprocessor of claim 3, wherein the control means (15) outputs the first switching signal at a specified timing if a fifth control signal from the micro-ROM (14) specifies selection of the third and fourth control signals from the first and second decoding means (12, 13).

9. A microcomputer system comprising
memory means (2) to store instructions and data; and
the microprocessor (1) of any of claims 1 to 8 for performing specified arithmetic operations according to the instructions from the memory means (2) and supplying the calculation result data to the memory means (2).
